# EUROPEAN PATENT SPECIFICATION

(11) **EP 4 310 441 B1**
(45) Date of publication and mention of the grant of the patent: **14.10.2026**
(21) Application number: 22185501.8
(22) Date of filing: 18.07.2022
(51) Int. Cl.: G01B 5/00, G01B 21/04

(54) **ACTIVE THERMAL MANAGEMENT FOR COORDINATE MEASURING MACHINES**
AKTIVES WÄRMEMANAGEMENT FÜR KOORDINATENMESSMASCHINEN
GESTION THERMIQUE ACTIVE POUR MACHINES DE MESURE DE COORDONNÉES

(43) Date of publication of application: 24.01.2024
(73) Proprietor: Hexagon Innovation Hub GmbH, 9435 Heerbrugg (CH)
(72) Inventor: KHANENYA, Nikolay, 9000 St. Gallen (CH); BRÜHLMANN, Danick, 9422 Staad (CH)
(74) Representative: Kaminski Harmann

(56) References cited:
- US-A1- 2005 166 413
- US-A1- 2011 061 253
- US-A1- 2020 049 477
- US-A1- 2020 230 802

## Description

The present invention generally pertains to a coordinate measuring machine (CMM) and to a method for measuring coordinates with a CMM. More particularly, the invention pertains to thermal management system and method for actively controlling a temperature of the CMM or parts thereof. According to embodiments of the CMM, this is achieved by constantly raising the temperature of structural elements of the CMM above ambient temperatures of a surrounding.

Coordinate measuring devices, such as stationary coordinate measuring machines (CMM) or portable articulated arm coordinate measuring machines (AACMM) or laser-based coordinate measuring devices including laser trackers, laser scanners and total stations are used in a wide variety of applications in quality management and quality assurance. Preferably, in order to allow highly precise coordinate measurements, a temperature of the respective device should be known, and preferably should be as constant and uniform as possible. Therefore, stationary CMMs are often operated in environments having known and constant ambient temperatures so that they typically may rely on an external ambient temperature stabilization system. Disadvantageously, this solution requires specially prepared spaces, e.g. metrological laboratories, with energy-consuming air conditioning being installed and constantly running. Consequently, this solution cannot be used outdoors and disadvantageously is not practicable for using coordinate measuring devices, such as portable or handheld CMMs, in unconditioned surroundings. It would be desirable to provide a CMM that can be used at different ambient temperatures and under changing ambient temperatures with high measurement precision.

Some coordinate measuring devices comprise temperature stabilization systems that are intended to cool the devices below the ambient temperature. However, these systems require refrigerating elements and liquid coolant circuits or passive heat conductors which are expensive, sensitive and/or generally difficult to handle. It would be desirable to provide a coordinate measuring device that keeps a constant temperature and can be build and maintained with less expenditure and reduced weight.

DE 11 2012 002 486 B4 discloses a warming-up procedure for a laser tracker using its internal electric components. US 7,861,430 B2 discloses a CMM comprising an active heating for an articulating probe head of the CMM. US 2020/230802 Al discloses a coordinate measuring machine with a temperature control system that uses sensors and heating elements to actively maintain the temperature of its frame elements.

It would be desirable to provide a functionality that allows keeping a temperature within a CMM, or at least the most important parts thereof, at a known, constant and uniform value throughout a measurement process independent of ambient temperatures.

It is therefore an object of the present invention to provide an improved CMM having a constant, particularly high, measurement precision independent of ambient temperatures. It is a further object of the present invention to provide such a CMM having an active temperature control functionality.

It is a further object of the present invention to provide such a CMM, wherein the CMM can be portable, handheld and/or battery-operated.

It is a further object of the present invention to provide such a portable, handheld and/or battery-operated CMM, wherein the CMM is lightweight and the temperature control functionality is energy-efficient.

At least one of these objects is achieved by the CMM of claim 1, the method of claim 13 and/or the dependent claims of the present invention.

A first aspect of the invention pertains to a CMM for determining at least one spatial coordinate of a measurement point on an object according to claim 1, the CMM comprising, inter alia, a structure comprising a base and a plurality of frame elements, wherein a probe head is attached to one of the frame elements and movable relative to the base. A temperature control system of the CMM is configured to control a temperature of a plurality of frame element of the structure and comprises a control unit, one or more temperature sensors and one or more heating elements. The temperature sensors are configured to generate temperature values and to transmit the temperature values to the control unit, and the control unit is configured to receive the temperature values and to control the heating elements based on the received temperature values.

According to some embodiments of the CMM, the control unit is configured to control the heating elements in such a way that the temperature of a first frame element of the structure remains constant, e.g. at least over a time period that lasts at least as long as a single measurement of a measurement point by the CMM.

According to some embodiments of the CMM, the control unit is configured to control the heating elements in such a way that the temperature of the first frame element exceeds an ambient temperature of a surrounding of the machine.

In one embodiment, the control unit is configured to control the heating elements in such a way that the temperature of the first frame element meets a pre-defined temperature that exceeds the ambient temperature.

In another embodiment, the temperature control system comprises at least one temperature sensor that is configured to measure the ambient temperature.

According to the invention, the CMM comprises one or more covers, wherein each cover encloses at least partially one or more of the frame elements and is configured to provide passive thermal insulation to reduce thermal exchange between the one or more enclosed frame elements and a surrounding of the machine. For instance, at least one heating element is at least partly provided inside one of the covers.

According to some embodiments of the CMM, the structure comprises a plurality of links and a plurality of joints as frame elements, wherein at least one of the joints movably connects two of the links. Optionally, at least one of the joints movably connects one of the links with the base and/or with the probe head. In one embodiment, at least one heating element is provided at each of the plurality of joints.

According to the invention, the CMM comprises one or more covers, wherein each cover encloses one or more frame elements and is configured to provide passive thermal insulation to reduce thermal exchange between the one or more enclosed frame elements and a surrounding of the machine. For instance, at least one heating element is at least partly provided inside one of the covers.

According to the invention, the temperature control system comprises an air-guiding tunnel enclosed by one or more of the covers, and one or more fans that are configured to guide heated air through the tunnel, e.g. from the one or more heating elements. Optionally, the control unit may be configured to control the fans, **e.g.** based on the received temperature values.

In one embodiment, the air-guiding tunnel is arranged around at least one of the frame elements. Optionally, if the frame element is a link enclosed by the cover, the air-guiding tunnel can be arranged spiralled around the link.

According to some embodiments of the CMM, each joint comprises a driving unit comprising a motor to actuate the two links connected by the joint relative to one another, and a measuring unit comprising one or more angular sensors to determine at least one angle between the two links connected by the joint. Preferably, the measuring unit and the driving unit are thermally decoupled from each other and/or provided in separate housings.

According to one embodiment of the CMM, the temperature control system is configured to control a temperature of a subset of the frame elements of the structure, the subset comprising at least two frame elements, wherein at least one heating element is provided at each frame element of the subset.

According to another embodiment of the CMM, the temperature control system is configured to control a temperature of each frame element of the structure, wherein at least one heating element is provided at each frame element of the structure.

According to some embodiments, the CMM comprises one or more motors for driving the probe head relative to the base for approaching the measurement point. For instance, the one or more motors are brushless motors. In one embodiment, at least a subset of the heating elements are one or more of the motors.

According to some embodiments, the temperature control system comprises one or more cooling elements and the control unit is configured to control the cooling elements based on the received temperature values.

According to some embodiments, the one or more temperature sensors include at least one of monitoring sensors and thermal-state sensors, wherein monitoring sensors are configured to monitor a temperature of at least one motor of the machine, and wherein thermal-state sensors are configured to generate data on a thermal state of the machine that can be used for a model-based compensation of thermal effects. In particular, each monitoring sensor may be connected to the control unit by an individual set of electric wires, and all thermal-state sensors may be connected to the control unit by the same common set of electric wires.

A second aspect of the invention pertains to a computer-implemented method for measuring coordinates, for instance using a CMM according to the first aspect of the invention. Said method comprises:
- measuring, using one or more temperature sensors, temperatures at the one or more frame elements;
- generating temperature data based on the measured temperatures and providing the temperature data to a control unit;
- controlling, by the control unit and based on the temperature data, a plurality of heating elements at the one or more frame elements,
- subsequently approaching a plurality of measurement points on an object with the probe head of the coordinate measuring machine by moving one or more frame elements of a structure of the coordinate measuring device; and
- determining coordinates of the measurement points.

The heating elements are controlled in such a way that the temperature of the one or more frame elements remains constant at least while the probe head approaches the plurality of measurement points.

According to some embodiments, the method comprises determining, by the control unit and based on the temperature data, a demand for heating the one or more frame elements, wherein controlling the heating elements is based on the determined demand.

In one embodiment, one or more ambient temperatures of a surrounding of the coordinate measuring machine are determined, and the demand is determined also based on the one or more ambient temperatures, e.g. wherein determining the one or more ambient temperatures comprises one or more temperature sensors measuring at least one ambient temperature. Preferably, the heating elements are controlled in such a way that a temperature of the one or more frame elements exceeds each of the one or more ambient temperatures.

A third aspect of the invention pertains to a computer programme product comprising programme code which is stored on a machine-readable medium, or being embodied by an electromagnetic wave comprising a programme code segment, and having computer-executable instructions for performing the method according to the second aspect of the invention.

The invention in the following will be described in detail by referring to exemplary embodiments that are accompanied by figures, in which:
- Fig. 1: shows an exemplary embodiment of a CMM according to the invention;
- Fig. 2: shows a temperature distribution in an exemplary embodiment of a CMM according to the invention and its surrounding;
- Fig. 3: shows an exemplary embodiment of a temperature control system of a CMM according to the invention;
- Figs. 4a-b: show a cover enclosing frame elements of an exemplary embodiment of a CMM according to the invention;
- Figs. 5a-b: show two exemplary embodiments of a joint as part of a CMM according to the invention;
- Fig. 6: shows the joint of Fig. 5b with two separate housings; and
- Fig. 7: shows a flow chart illustrating an exemplary embodiment of a method for determining coordinates.

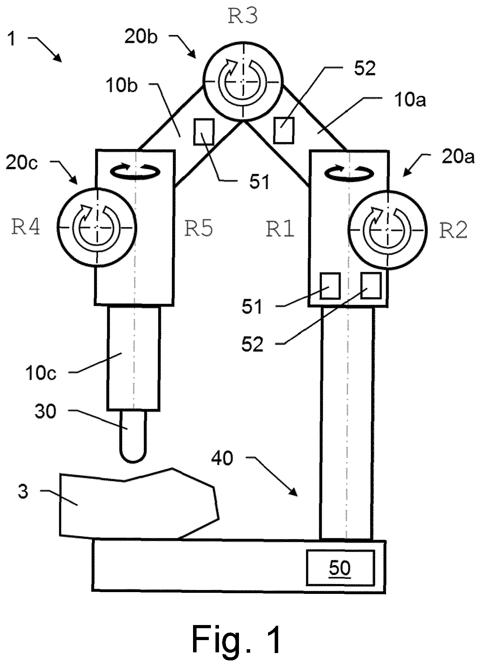

Figure 1 shows an exemplary embodiment of a CMM 1 according to the invention. In the shown example, the CMM is embodied as an articulated arm coordinate measuring machine (AACMM) comprising a structure with three links (or arms) 10a, 10b, 10c and three rotary joints 20a, 20b, 20c connecting the links rotatably with each other and with a base 40 of the CMM 1. In the shown example, a first joint 20a provides rotation of a first link 10a relative to the base in two axes of rotation (R1, R2), a second joint 20b provides rotation of a second link 10b relative to the first link 10a in one axis of rotation (R3), and a third joint 20a provides rotation of a third link 10c relative to the second link 10b in two axes of rotation (R4, R5). A probe head 30 is attached to the third link 10c and thus movable relative to the base in three dimensions to approach measurement points on an object 3 to be measured.

According to the invention, the CMM 1 comprises a temperature control system to actively control a temperature of the CMM, its structure or parts thereof. In the shown embodiment, a control unit 50 of the temperature control system is provided in the base 40 of the CMM 1 and connected via electric wires (not shown) with a plurality of temperature sensors 51 and a plurality of heating elements 52 in the structure. Alternatively, one or more central heating elements may be provided, wherein heated air or fluid is guided to those parts of the CMM the temperature of which is to be controlled. For instance, a central heating element may be provided in or at the base 40. Heated air may then be guided from the central heating element to other parts of the CMM 1 through pipes or hoses that are connected to the links and/or joints or provided inside the links and/or joints or through tunnels inside covers that are provided around the links and/or joints.

Although the CMM 1 shown here is an AACCM, also other kinds of CMMs may be equipped with the temperature control system, including portable and handheld CMMs as well as stationary CMMs, such as portal-, bridge-, cantilever-, or column-type CMMs.

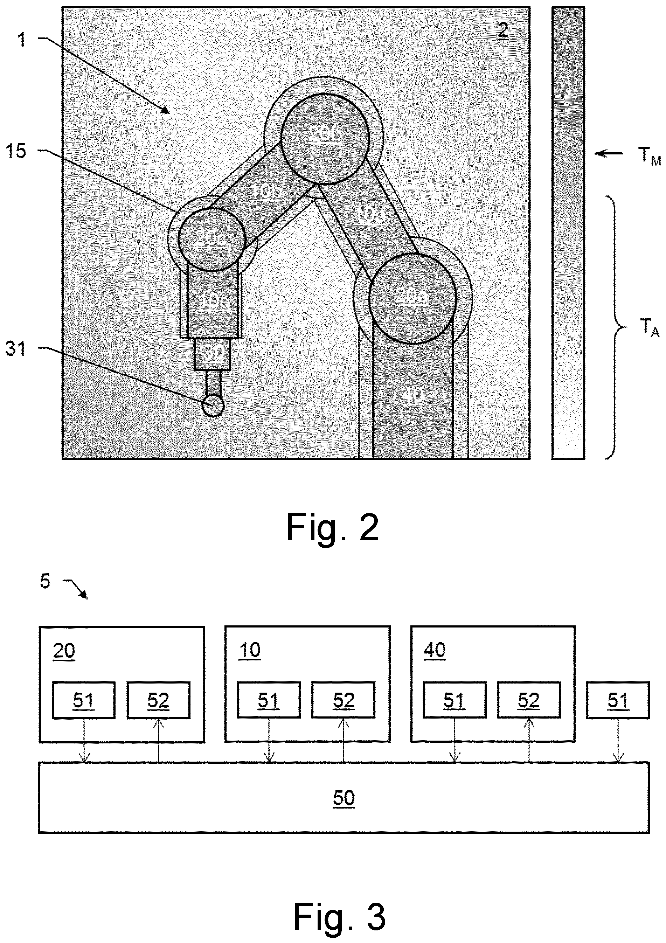

Figure 2 illustrates a temperature distribution in a CMM 1 being equipped with a built-in active temperature control system (TCS). Darker shades indicate higher temperatures. The CMM 1 is positioned in an environment 2 that is not air conditioned and comprises a variety of ambient temperature values T_{A} to which the CMM 1 is exposed.

The TCS of the CMM 1 is configured to maintain the machine's temperature T_{M} constant over a time period t₁ that is at least as long a single workpiece measurement (or longer). In the shown example, all components of the CMM 1, i.e. the base 40, the links 10a-c, the joints 20a-c and the probe head 30 including a touch trigger probe 31 evenly have the temperature T_{M}. However, for some CMMs or processes it may be sufficient to control the temperature only of a subset of these components, for instance only of the links 10a-c and the joints 20a-c.

T_{M} is selected to reliably exceed all possible values of ambient temperature T_{A} during the time period t₁. For instance, there may be one permanently fixed value T_{M} of the maintained temperature that will remain constant during the whole operating life of the machine, and it will be selected to reliably exceed all possible values of ambient temperature at all times and for all machines. For instance, under the assumption that the CMM 1 will not be used in ambient temperatures T_{A} exceeding 45°C, the value T_{M} may be selected to be 46°C.

Alternatively, the value T_{M} may be selected flexibly based on the concrete circumstances, i.e. the actual or assumed ambient temperature T_{A}, which is advantageously for CMMs that are used at different geographical locations with a different local climates or during different seasons, since it may save energy. The TCS may comprise temperature sensors that measure an actual ambient temperature T_{A}. Alternatively, the actual ambient temperature T_{A} may be retrieved from external sources, e.g. via an Internet connection, or be input by a user of the CMM **1.** Alternatively, a position, date and time may be detected by the TCS and an approximate ambient temperature T_{A} may be assumed therefrom, **e.g.** automatically retrieved from a look-up table that is stored in a memory of the TCS or accessible by the TCS. Thus, if a temperature is assumed to be in a range of 25°C to 30°C at the position and time of the measuring process, T_{M} may be selected to be **e.g.** 32°C.

In the shown embodiment, the base 40, the links 10a-c, the joints 20a-c of the CMM 1 are provided with covers 15 that provide passive thermal insulation to reduce thermal exchange between the enclosed elements and the surrounding.

To further improve the thermal behavior, preferably all structural parts in the measurement chain of the machine **(i.e.** structural parts of at least all links 10a-c and all joints 20a-c) have the same or basically the same coefficient of thermal expansion (CTE) along the metrology chain **(e.g.,** all joints have the same axial CTE, whereas the radial CTE is less important). Preferably, the CTE is within +-30% of variation along the structure (+-3PPM at 10PPM of absolute CTE value of steel), particularly within +-10%. To achieve the uniform CTE, the same isotropic material may be used for all structural parts. Alternatively, different materials having the same CTE might be used, for instance a stainless steel and a carbon-based composite that is designed to have the same CTE as the used stainless steel.

Figure 3 shows an exemplary embodiment of a temperature control system (TCS) 5 for a CMM. The TCS 5 comprises a control unit 50 and several temperature sensors 51 and heating elements 52 that are distributed over several components of a CMM (here: link 10, joint 20 and base 40). For instance, temperature sensors 51 and heating elements 52 may be provided as pairs, **e.g.** so that at every heating element 52 a temperature sensor 51 is provided. In the shown example, the TGS 5 comprises a further temperature sensor 51 that is not provided in one of the components but arranged outside of the CMM to measure temperatures of the surrounding of the CMM.

The control unit 50 may be comprise data processing and computing capacities, e.g. including a processor and algorithms, and data storing capacities, **e.g.** a memory for storing a database. The control unit 50 be provided in any part of the CMM, **e.g.** in the base, or outside of the CMM, **e.g.** in a remote control of the CMM or other mobile device.

The temperature sensors 51 are configured to measure a temperature, to generate temperature values and to transmit the temperature values to the control unit 50. This may be performed continuously, **e.g.** as a permanent data stream, or in pre-defined time intervals, **e.g.** every 5 or 30 seconds.

The sensors may be divided into two distinct groups, **i.e.** the "fast" sensors and the "slow" sensors. The fast sensors have two functions: control and safety. Fast sensors provide rapid feedback to the control loops of the TCS and monitor the temperature of the machine's motors to detect a possible overheating in a timely manner. The slow sensors are used for metrology. They collect excessive data on the thermal state of the machine (and also on the ambient humidity). This data is used for a model-based compensation of thermal effects that would otherwise decrease the machine's metrological performance.

These two sensor groups may be implemented differently. Preferably, each fast sensor has its own set of electric wires for connection to the control unit 50, while all the slow sensors may share the same set of electric wires **(e.g.,** a so-called 1-wire bus).

The heating elements 52 may be embodied as resistive heaters. They are numerous and are preferably placed at many locations along the measurement chain. This allows achieving "Uniformity by Quantity", i.e. a higher uniformity of the thermal state by introducing a larger quantity of heating elements.

When selecting locations for the heating elements 52, a higher priority may be given to the machine's joints, and a lower priority to its links. This is because the structure of the links normally is simpler than the structure of the joints, and therefore the thermal state of the former is easier to simulate and compensate using software, even if it should be less uniform.

The control unit 50 receives data from all sensors 51 and regulates the thermal power output of all heaters 52 so that the temperature values received from the fast sensors remains as close as possible to the set point T_{M} and also remains below a preset safety limit. For instance, the thermal safety limit for human touch can be set to around 60°C and for motor windings to around 100°C.

In embodiments of the CMM that comprise actuators to actively move the probe head relative to the base, often a motor is provided at every joint. All kinds of motors generate heat and the more heat is produced by the motors, the less heat needs to be produced by the heating elements 52. The sensors 51 may be positioned to detect the heat generated by the motors, and/or the control unit 50 may be configured to predict the heat generated by the motors. The control unit 50 may then adapt the heat output of the heating elements 52 accordingly.

Optionally, some or all of these motors can be used both for driving the probe head and as additional heating elements 52 of the temperature control system **5.** However, the heat output generally depends on the use of the motor for actuating a joint, so that in many motor types the generated heat cannot be controlled independently. However, some kinds of motors, such as for instance brushless motors, allow for somewhat independent active control of the amount of heat that is generated. Brushless motor winding consists of two sets of coils. The currents that flow through each of them are controlled independently. Thus, the two projections of the stator's magnetic field (the one projected onto the direction of rotor's magnetic field, and the one projected on the orthogonal direction) can be controlled almost independently. The latter projection creates a mechanical torque, which by definition is the main function of the motor. The former projection creates no torque, but still generates heat. Therefore, the control unit 50 may be configured to actively control - at least to a certain extent - the amount of heat that is generated by this motor, so that it can function as an additional heating element 52. Thus, by using a brushless motor or other suitable motor type, with this motor one heating element would already be provided at every joint, thus advantageously reducing the number of needed dedicated heating elements 52. Optionally, also a transmission and/or a brake may be provided that generate heat.

Optionally, cooling elements may be provided that may be controlled by the control unit 50 similarly to the heating elements in order to enhance control of the temperature, **e.g.** to reduce a temperature of a certain portion of the CMM faster than only by turning off one or more heating elements. Alternatively or additionally, some or all of the heating elements may be embodied as heating-cooling elements. The cooling elements may comprise active cooling elements, e.g. be embodied as a vapor-compression refrigeration system or as thermoelectric coolers. The cooling elements may also comprise passive cooling elements that do not actively provide cooling but passively by enabling or increasing temperature exchange with the surrounding, e.g. comprising fans that can be activated and/or ventilation slots that can be opened or closed. The cooling elements may be controlled by the control unit 50 based on received temperature data in order to keep the temperature evenly and/or below a pre-defined threshold value, such as preset safety limit.

The control unit 50 may be configured to communicate with an on-board computer of the CMM (not shown here), e.g. to issue reports or to receive high-level commands.

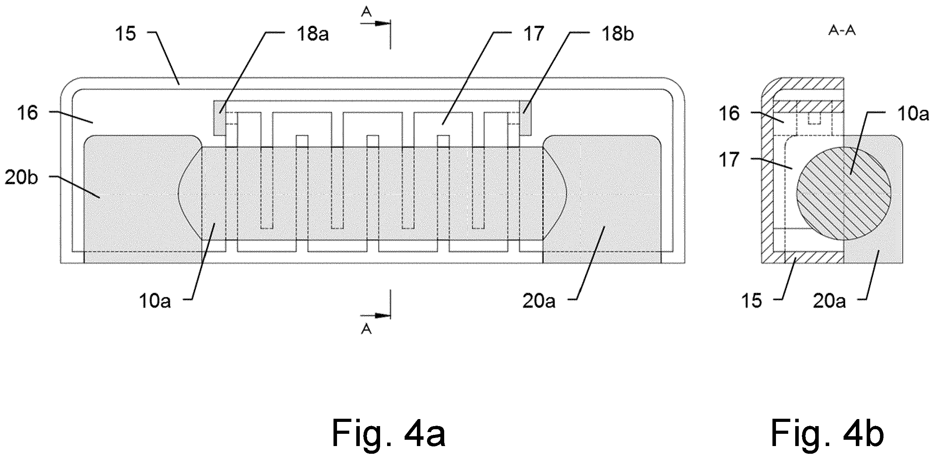

Figures 4a and 4b show sectional views of an example of a cover 15 as part of the CMM. For illustrative purposes, only one half of the cover 15 is shown here.

The shown cover 15 encloses a space 16 around a link 10a and two adjacent joints 20a, 20b of the CMM's structure. The cover 15 provides passive thermal insulation to reduce thermal exchange between the enclosed frame elements 10a, 20a, 20b and the surrounding of the CMM. The cover 15 may be made from plastic materials and optionally comprise one or more isolation layers. For instance, the cover 15 may comprise a polyethylene terephthalate (PET) shell having a polyurethane (PUR) foam filling.

One or more heating elements and one or more temperature sensors (not shown here) are provided inside the space 16 enclosed by the cover 15. In the shown example, an air-guiding tunnel 17 is provided within the space 16, e.g. as an integral part of the cover 15, comprises two fans 18a, 18b and is designed to enhance a thermal exchange between the frame elements 10a, 20a, 20b. As shown in Figure 4a, the tunnel 17 may be spiralled about the whole length of the link 10a, e.g. enwinding the link 10a. The tunnel 17 has a return path to close the air circulation loop. The fans 18a,b preferably are mounted on the cover 15 and do not touch the frame elements 10a, 20a, 20b to reduce vibrations of the CMM's structure.

The CMM may comprise a multitude of like or similar covers 15 to enclose all structural parts of the CMM. These covers 15 may reduce the thermal exchange between some parts and between some parts and the environment by providing a passive thermal insulation. At the same time, the fans 18 and tunnels 17 included in the covers 15 may increase the thermal exchange between other parts or with the environment by mechanically guiding the air streams.

In some embodiments, the fans 18a,b may be controlled by the same control unit as the heating elements. For instance, the fans 18a,b may be connected in parallel to a single output of the control unit.

Also, they may be connected directly to a constant voltage power source, e.g. to operate at maximal speed all the time.

Preferably, a temperature of the guided air is preconditioned prior to guiding. Temperatures of the enwinded link 10a influence the temperature of the air guided around it. By continuously measuring the temperatures of the link 10a at a beginning of the tunnel 17, the temperature of the air or fluid can thus be controlled to have the desired temperature at an end of the tunnel. Alternatively or additionally, temperature sensors can be provided in the tunnel to directly measure the temperature of the air or fluid.

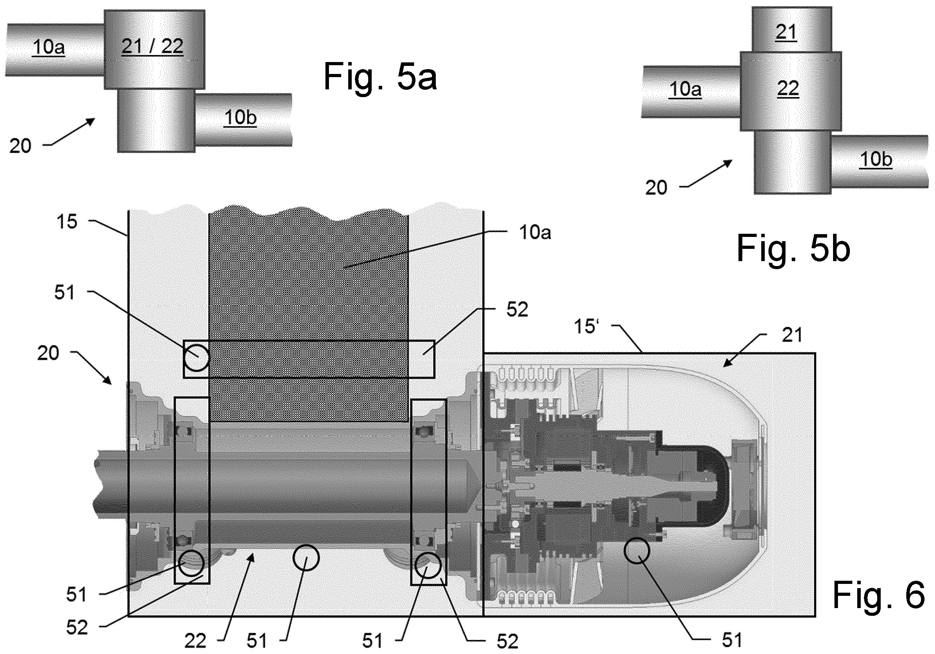

Figures 5a and 5b show two exemplary embodiments of a joint 20 of a CMM according to the invention. In some embodiments of the CMM, its structure comprises a plurality of links and a plurality of joints as frame elements. As shown here, a joint 20 movably connects two of the links 10a, 10b. Additionally (not shown here), one of the joints may movably connect one of the links 10a, 10b with a base of the CMM, and another one of the joints may movably connect another one of the links 10a, 10b with a probe head of the CMM. In both embodiments of Figures 5a and 5b, the joint 20 comprises a driving unit 21 having a motor to actuate the two links 10a, 10b that are connected by the joint 20 relative to one another. Also, in both embodiments, the joint 20 comprises a measuring unit 22 having one or more angular sensors to determine at least one angle between the two links 10a, 10b. In the example of Figure 5a, the measuring unit 21 and the driving unit 22 are provided together, for instance together in a single housing. This allows for a compact setup.

In the example of Figure 5b, the measuring unit 21 and the driving unit 22 are provided thermally decoupled from each other, for instance in separate housings. This reduces the heat transfer between the two components, particularly from the motor of the driving unit 22 to the sensors of the measuring unit 21 and the structural elements of the joints. At least one heating element may be is provided at the joint 20 to active control the temperature at the joint, particularly at the measuring unit 22.

Figure 6 shows more details of the embodiment of the joint 20 of Figure 5b. A measuring unit 22 and a first link 10a attached to it are provided in a common housing 15, whereas the driving unit 22 is provided in a separate housing 15'. Heating elements 52 and temperature sensors 51 as part of a TCS of the CMM are provided at or near the joint 20. For instance, as shown here, the heating elements 52 may be ringshaped and attached around the joint 20 and the link 10a. Optionally, in order to improve the control of the heating elements, a temperature sensor may be provided together with each of the heating elements 52, **e.g.** at, next to or near the heating element 52.

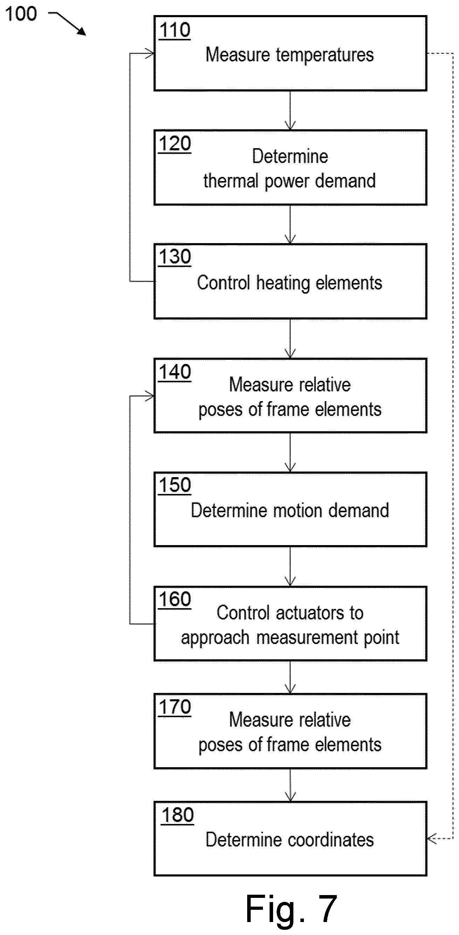

Figure 7 shows a flow chart illustrating an exemplary computer-implemented method 100 for measuring coordinates. The method comprises measuring 110, using the one or more temperature sensors, actual temperatures at one or more frame elements, generating temperature data based on the measured temperatures and providing the temperature data to the control unit. Based on the temperature data, the control unit determines 120 a demand for thermal power in order to reach a desired, e.g. pre-determined, temperature. Based on the determined demand, the control unit then controls 130 the heating elements to produce heat, so that the desired temperature is reached at the one or more frame elements.

The desired temperature may be selected so that it reliably exceeds all possible values of ambient temperature during the coordinate measurement. For instance, the desired temperature is fixedly set and remains constant during the whole operating life of the CMM. Alternatively, the desired temperature may be selected flexibly based on a measured or assumed ambient temperature. Consequently, the demand for heating may be determined 120 also based on ambient temperatures that are either measured by one or more temperature sensors or determined in other ways, e.g. retrieved from external sources or a user input.

When the desired temperature has been reached, the actual coordinate measurement can be performed, which comprises steps that, per se, are generally known in the art. The coordinate measurement includes an initial measurement 140 of relative poses of the frame elements, e.g. using the measuring units 22 shown in Figures 5a, and 6 to measure angles between links, or more generally, especially in the case of a portal-type CMM, by determining relative positions of the frame members. Measuring 140 the relative poses between adjoining frame elements may comprise measuring a single angle as well as measurements in up to six degrees-of-freedom (6DOF).

The initial pose measurement 140 is then used to determine 150 a motion demand of the frame elements for approaching a measurement point on an object to be measured with a probe head of the CMM. Based on the determined motion demand, the control unit controls 160 actuators of the CMM to move one or more frame elements of the CMM structure so that the probe head approaches the measurement point, e.g. automatically by controlling one or more motors of the CMM. Thereby, steps 140, 150 and 160 may be repeated, e.g. relative poses of the frame elements may be continuously monitored and the motion demand may be continuously updated until the measurement point has been reached.

When the measurement point has been reached, relative poses of the frame elements are measured 170 (e.g. as described with respect the initial measurement 140). A position of the probe head, e.g. relative to a base of the CMM, is deductible from the collective measured relative poses, so that coordinates of the measurement point approached by the probe head can be determined 180. Optionally, the actual temperatures may be used for adapting the coordinates based on known temperature-induced deflections in the frame elements.

To achieve a reliably high measurement precision, the heating elements are controlled 130 preferably in such a way that the temperature of the one or more frame elements remains constant during the whole coordinate measurement, e.g. at least while the probe head approaches the measurement point and until the relative poses of the frame elements have been measured 170. Optionally, the temperature of the one or more frame elements is controlled to remain constant until all measurement points of the object have been approached and probed, so that the coordinates may be determined 180 with high precision.

Although the invention is illustrated above, partly with reference to some preferred embodiments, it must be understood that numerous modifications and combinations of different features of the embodiments can be made.

## Claims

1. Coordinate measuring machine (1) for determining at least one spatial coordinate of a measurement point on an object (3), the coordinate measuring machine comprising
- a structure comprising a base (40) and a plurality of frame elements (10a-c, 20a-c), wherein a probe head (30) is attached to one of the frame elements and movable relative to the base (40);
- a cover (15) enclosing at least partially one or more of the frame elements (10a-c, 20a-c) and being configured to provide passive thermal insulation to reduce thermal exchange between the one or more enclosed frame elements (10a-c, 20a-c) and a surrounding (2) of the machine (1); and
- a temperature control system (5) configured to control a temperature of a plurality of frame elements of the structure and comprising a control unit (50), one or more temperature sensors (51), and one or more heating elements (52),
wherein
- the temperature sensors (51) are configured to generate temperature values and to transmit the temperature values to the control unit (50); and
- the control unit (50) is configured to receive the temperature values and to control the heating elements (52) based on the received temperature values,
**characterized in that**
- at least one heating element (52) is at least partly provided inside the cover (15);
- the temperature control system (5) comprises an air-guiding tunnel (17) enclosed by the cover (15) and one or more fans (18a,b) configured to guide heated air from the at least one heating element (52) through the tunnel (17); and
- the control unit (50) is configured to control the fans (18a,b) based on the received temperature values.

2. Coordinate measuring machine (1) according to claim 1, wherein the control unit (50) is configured to control the heating elements (52) in such a way that the temperature of a first frame element remains constant, particularly at least over a time period that lasts at least as long as a single measurement of a measurement point by the machine (1).

3. Coordinate measuring machine (1) according to claim 1 or claim 2, wherein the control unit (50) is configured to control the heating elements (52) in such a way that the temperature of a first frame element exceeds an ambient temperature of a surrounding (2) of the machine (1), particularly wherein
- the control unit (50) is configured to control the heating elements (52) in such a way that the temperature of the first frame element meets a pre-defined temperature that exceeds the ambient temperature; and/or
- at least one temperature sensor (51) is configured to measure the ambient temperature.

4. Coordinate measuring machine (1) according to any one of the preceding claims, wherein the structure comprises a plurality of links (10a-c) and a plurality of joints (20a-c) as frame elements, wherein at least one of the joints (20a-c) movably connects two of the links (10a-c), particularly wherein
- at least one of the joints (20a-c) movably connects one of the links (10a-c) with the base (40);
- at least one of the joints (20a-c) movably connects one of the links (10a-c) with the probe head (30); and/or
- at least one heating element (52) is provided at each of the plurality of joints (20a-c).

5. Coordinate measuring machine (1) according to any one of the preceding claims, wherein the air-guiding tunnel (17) is arranged around at least one of the frame elements (10a-c, 20a-c).

6. Coordinate measuring machine (1) according to claim 5, wherein the frame element is a link (10a-c) enclosed by the cover (15), and the air-guiding tunnel (17) is arranged spiralled around the link.

7. Coordinate measuring machine (1) according to any one of the preceding claims, wherein each joint (20a-c) comprises
- a driving unit (21) comprising a motor to actuate the two links (10a-c) connected by the joint relative to one another, and
- a measuring unit (22) comprising one or more angular sensors to determine at least one angle between the two links (10a-c) connected by the joint,
wherein the measuring unit (21) and the driving unit (22) are thermally decoupled from each other and/or are provided in separate housings.

8. Coordinate measuring machine (1) according to any one of the preceding claims, wherein the temperature control system (5) is configured to control a temperature of a subset of the frame elements (10a-c, 20a-c) of the structure, the subset comprising at least two frame elements (10a-c, 20a-c), wherein at least one heating element (52) is provided at each frame element (10a-c, 20a-c) of the subset.

9. Coordinate measuring machine (1) according to any one of claims 1 to 7, wherein the temperature control system (5) is configured to control a temperature of each frame element (10a-c, 20a-c) of the structure, wherein at least one heating element (52) is provided at each frame element (10a-c, 20a-c) of the structure.

10. Coordinate measuring machine (1) according to any one of the preceding claims, comprising one or more motors for driving the probe head (30) relative to the base (40) for approaching the measurement point, wherein at least a subset of the heating elements (52) are one or more of the motors, particularly wherein the one or more motors are brushless motors.

11. Coordinate measuring machine (1) according to claim 10, wherein the temperature control system (5) comprises one or more cooling elements and the control unit (50) is configured to control the cooling elements based on the received temperature values.

12. Coordinate measuring machine (1) according to claim 10 or claim 11, wherein the one or more temperature sensors (51) include at least one of monitoring sensors and thermal-state sensors, wherein
- monitoring sensors are configured to monitor a temperature of at least one motor of the machine (1), particularly wherein each monitoring sensor is connected to the control unit by an individual set of electric wires; and
- thermal-state sensors are configured to generate data on a thermal state of the machine (1) that can be used for a model-based compensation of thermal effects, particularly wherein all thermal-state sensors are connected to the control unit by the same common set of electric wires.

13. Computer-implemented method (100) for measuring coordinates using a coordinate measuring machine (1) according to any one of the preceding claims, the method (100) comprising
- subsequently approaching a plurality of measurement points on an object (3) with a probe head (30) of the coordinate measuring machine (1) by moving one or more frame elements (10a-c, 20a-c) of a structure of the coordinate measuring device (1); and
- determining (180) coordinates of the measurement points,
**characterized by**
- measuring (110), using one or more temperature sensors (51), temperatures at the one or more frame elements (10a-c, 20a-c);
- generating temperature data based on the measured temperatures and providing the temperature data to a control unit (50); and
- controlling (130), by the control unit (50) and based on the temperature data, a plurality of heating elements (52) at the one or more frame elements (10a-c, 20a-c),
wherein the heating elements (52) are controlled (130) in such a way that the temperature of the one or more frame elements (10a-c, 20a-c) remains constant at least while the probe head (30) approaches the plurality of measurement points.

14. Method (100) according to claim 13, comprising determining (120), by the control unit (50) and based on the temperature data, a demand for heating the one or more frame elements (10a-c, 20a-c), wherein controlling (130) the heating elements (52) is based on the determined demand, particularly wherein
- one or more ambient temperatures of a surrounding (2) of the coordinate measuring machine (1) are determined, and the demand is determined (120) also based on the one or more ambient temperatures, in particular wherein determining the one or more ambient temperatures comprises one or more temperature sensors measuring at least one ambient temperature; and
- the heating elements (52) are controlled (130) in such a way that a temperature of the one or more frame elements (10a-c, 20a-c) exceeds each of the one or more ambient temperatures.

15. Computer programme product comprising programme code, which is stored on a machine-readable medium, or being embodied by an electromagnetic wave comprising a programme code segment, and having computer-executable instructions for performing the method (100) according to claim 13 or claim 14, when run on the control unit of the coordinate measuring machine according to any of claims 1 to 12.

## Patentansprüche

1. Koordinatenmessmaschine (1) zum Bestimmen mindestens einer räumlichen Koordinate eines Messpunktes an einem Objekt (3), wobei die Koordinatenmessmaschine umfasst
- eine Struktur, die eine Basis (40) und eine Vielzahl von Rahmenelementen (10a-c, 20a-c) umfasst, wobei ein Tastkopf (30) an einem der Rahmenelemente angebracht und relativ zur Basis (40) beweglich ist;
- eine Abdeckung (15), die eines oder mehrere der Rahmenelemente (10a-c, 20a-c) mindestens teilweise umschliesst und dazu ausgebildet ist, eine passive Wärmeisolierung bereitzustellen, um einen Wärmeaustausch zwischen den einen oder mehreren umschlossenen Rahmenelementen (10a-c, 20a-c) und einer Umgebung (2) der Maschine (1) zu verringern; und
- ein Temperaturregelsystem (5), das dazu ausgebildet ist, eine Temperatur einer Vielzahl von Rahmenelementen der Struktur zu regeln, und das eine Steuereinheit (50), einen oder mehrere Temperatursensoren (51) und ein oder mehrere Heizelemente (52) umfasst,
wobei
- die Temperatursensoren (51) dazu ausgebildet sind, Temperaturwerte zu erzeugen und die Temperaturwerte an die Steuereinheit (50) zu übertragen; und
- die Steuereinheit (50) dazu ausgebildet ist, die Temperaturwerte zu empfangen und die Heizelemente (52) auf der Grundlage der empfangenen Temperaturwerte zu steuern,
**dadurch gekennzeichnet, dass**
- mindestens ein Heizelement (52) mindestens teilweise innerhalb der Abdeckung (15) vorgesehen ist;
- das Temperaturregelsystem (5) einen von der Abdeckung (15) umschlossenen Luftführungstunnel (17) und einen oder mehrere Ventilatoren (18a, b) umfasst, die dazu ausgebildet sind, erwärmte Luft von dem mindestens einen Heizelement (52) durch den Tunnel (17) zu führen; und
- die Steuereinheit (50) dazu ausgebildet ist, die Ventilatoren (18a, b) auf der Grundlage der empfangenen Temperaturwerte zu steuern.

2. Koordinatenmessmaschine (1) nach Anspruch 1, wobei die Steuereinheit (50) dazu ausgebildet ist, die Heizelemente (52) derart zu steuern, dass die Temperatur eines ersten Rahmenelements konstant bleibt, insbesondere mindestens über einen Zeitraum, der mindestens so lange dauert wie eine einzelne Messung eines Messpunktes durch die Maschine (1).

3. Koordinatenmessmaschine (1) nach Anspruch 1 oder Anspruch 2, wobei die Steuereinheit (50) dazu ausgebildet ist, die Heizelemente (52) derart zu steuern, dass die Temperatur eines ersten Rahmenelements eine Umgebungstemperatur einer Umgebung (2) der Maschine (1) übersteigt, insbesondere wobei
- die Steuereinheit (50) dazu ausgebildet ist, die Heizelemente (52) derart zu steuern, dass die Temperatur des ersten Rahmenelements einer vorgegebenen Temperatur entspricht, welche die Umgebungstemperatur übersteigt; und/oder
- mindestens ein Temperatursensor (51) dazu ausgebildet ist, die Umgebungstemperatur zu messen.

4. Koordinatenmessmaschine (1) nach einem der vorhergehenden Ansprüche, wobei die Struktur eine Vielzahl von Gliedern (10a-c) und eine Vielzahl von Gelenken (20a-c) als Rahmenelemente umfasst, wobei mindestens eines der Gelenke (20a-c) zwei der Glieder (10a-c) beweglich miteinander verbindet, insbesondere wobei
- mindestens eines der Gelenke (20a-c) eines der Glieder (10a-c) beweglich mit der Basis (40) verbindet;
- mindestens eines der Gelenke (20a-c) eines der Glieder (10a-c) beweglich mit dem Tastkopf (30) verbindet; und/oder
- an jedem der Vielzahl von Gelenken (20a-c) mindestens ein Heizelement (52) vorgesehen ist.

5. Koordinatenmessmaschine (1) nach einem der vorhergehenden Ansprüche, wobei der Luftführungstunnel (17) um mindestens eines der Rahmenelemente (10a-c, 20a-c) angeordnet ist.

6. Koordinatenmessmaschine (1) nach Anspruch 5, wobei das Rahmenelement ein von der Abdeckung (15) umschlossenes Glied (10a-c) ist und der Luftführungstunnel (17) spiralförmig um das Glied angeordnet ist.

7. Koordinatenmessmaschine (1) nach einem der vorhergehenden Ansprüche, wobei jedes Gelenk (20a-c) umfasst
- eine Antriebseinheit (21), die einen Motor umfasst, um die beiden durch das Gelenk verbundenen Glieder (10a-c) relativ zueinander zu betätigen, und
- eine Messeinheit (22), die einen oder mehrere Winkelsensoren umfasst, um mindestens einen Winkel zwischen den beiden durch das Gelenk verbundenen Gliedern (10a-c) zu bestimmen,
wobei die Messeinheit (21) und die Antriebseinheit (22) thermisch voneinander entkoppelt sind und/oder in getrennten Gehäusen vorgesehen sind.

8. Koordinatenmessmaschine (1) nach einem der vorhergehenden Ansprüche, wobei das Temperaturregelsystem (5) dazu ausgebildet ist, eine Temperatur einer Teilmenge der Rahmenelemente (10a-c, 20a-c) der Struktur zu regeln, wobei die Teilmenge mindestens zwei Rahmenelemente (10a-c, 20a-c) umfasst und wobei an jedem Rahmenelement (10a-c, 20a-c) der Teilmenge mindestens ein Heizelement (52) vorgesehen ist.

9. Koordinatenmessmaschine (1) nach einem der Ansprüche 1 bis 7, wobei das Temperaturregelsystem (5) dazu ausgebildet ist, eine Temperatur jedes Rahmenelements (10a-c, 20a-c) der Struktur zu regeln, wobei an jedem Rahmenelement (10a-c, 20a-c) der Struktur mindestens ein Heizelement (52) vorgesehen ist.

10. Koordinatenmessmaschine (1) nach einem der vorhergehenden Ansprüche, umfassend einen oder mehrere Motoren zum Antreiben des Tastkopfes (30) relativ zur Basis (40), um den Messpunkt anzufahren, wobei mindestens eine Teilmenge der Heizelemente (52) einer oder mehrere der Motoren sind, wobei es sich bei dem einen oder den mehreren Motoren insbesondere um bürstenlose Motoren handelt.

11. Koordinatenmessmaschine (1) nach Anspruch 10, wobei das Temperaturregelsystem (5) ein oder mehrere Kühlelemente umfasst und die Steuereinheit (50) dazu ausgebildet ist, die Kühlelemente auf der Grundlage der empfangenen Temperaturwerte zu steuern.

12. Koordinatenmessmaschine (1) nach Anspruch 10 oder Anspruch 11, wobei der eine oder die mehreren Temperatursensoren (51) mindestens eine der folgenden Sensorarten umfassen: Überwachungssensoren und Wärmezustandssensoren, wobei
- Überwachungssensoren dazu ausgebildet sind, eine Temperatur mindestens eines Motors der Maschine (1) zu überwachen, wobei insbesondere jeder Überwachungssensor durch einen individuellen Satz elektrischer Leitungen mit der Steuereinheit verbunden ist; und
- Wärmezustandssensoren dazu ausgebildet sind, Daten über einen Wärmezustand der Maschine (1) zu erzeugen, die für eine modellbasierte Kompensation thermischer Effekte verwendet werden können, wobei insbesondere alle Wärmezustandssensoren durch denselben gemeinsamen Satz elektrischer Leitungen mit der Steuereinheit verbunden sind.

13. Computerimplementiertes Verfahren (100) zum Messen von Koordinaten unter Verwendung einer Koordinatenmessmaschine (1) nach einem der vorhergehenden Ansprüche, wobei das Verfahren (100) umfasst
- das anschliessende Anfahren einer Vielzahl von Messpunkten an einem Objekt (3) mit einem Tastkopf (30) der Koordinatenmessmaschine (1) durch Bewegen eines oder mehrerer Rahmenelemente (10a-c, 20a-c) einer Struktur der Koordinatenmessvorrichtung (1); und
- das Bestimmen (180) von Koordinaten der Messpunkte,
**gekennzeichnet durch**
- Messen (110), unter Verwendung eines oder mehrerer Temperatursensoren (51), von Temperaturen an den einen oder mehreren Rahmenelementen (10a-c, 20a-c);
- Erzeugen von Temperaturdaten auf der Grundlage der gemessenen Temperaturen und Bereitstellen der Temperaturdaten für eine Steuereinheit (50); und
- Steuern (130), durch die Steuereinheit (50) und auf der Grundlage der Temperaturdaten, einer Vielzahl von Heizelementen (52) an den einen oder mehreren Rahmenelementen (10a-c, 20a-c),
wobei die Heizelemente (52) derart gesteuert (130) werden, dass die Temperatur der einen oder mehreren Rahmenelemente (10a-c, 20a-c) mindestens während des Anfahrens der Vielzahl von Messpunkten durch den Tastkopf (30) konstant bleibt.

14. Verfahren (100) nach Anspruch 13, umfassend das Bestimmen (120), durch die Steuereinheit (50) und auf der Grundlage der Temperaturdaten, eines Bedarfs zum Erwärmen der einen oder mehreren Rahmenelemente (10a-c, 20a-c), wobei das Steuern (130) der Heizelemente (52) auf dem bestimmten Bedarf beruht, insbesondere wobei
- eine oder mehrere Umgebungstemperaturen einer Umgebung (2) der Koordinatenmessmaschine (1) bestimmt werden und der Bedarf (120) auch auf der Grundlage der einen oder mehreren Umgebungstemperaturen bestimmt wird, wobei insbesondere das Bestimmen der einen oder mehreren Umgebungstemperaturen umfasst, dass ein oder mehrere Temperatursensoren mindestens eine Umgebungstemperatur messen; und
- die Heizelemente (52) derart gesteuert (130) werden, dass eine Temperatur der einen oder mehreren Rahmenelemente (10a-c, 20a-c) jede der einen oder mehreren Umgebungstemperaturen übersteigt.

15. Computerprogrammprodukt, umfassend Programmcode, der auf einem maschinenlesbaren Medium gespeichert ist, oder durch eine elektromagnetische Welle verkörpert ist, die einen Programmcodeabschnitt umfasst, und mit computerausführbaren Anweisungen zum Ausführen des Verfahrens (100) nach Anspruch 13 oder Anspruch 14, wenn die Anweisungen auf der Steuereinheit der Koordinatenmessmaschine nach einem der Ansprüche 1 bis 12 ausgeführt werden.

## Revendications

1. Machine de mesure par coordonnées (1) pour déterminer au moins une coordonnée spatiale d'un point de mesure sur un objet (3), la machine de mesure par coordonnées comprenant
- une structure comprenant une base (40) et une pluralité d'éléments de châssis (10a-c, 20a-c), dans laquelle une tête de palpage (30) est fixée à l'un des éléments de châssis et est mobile par rapport à la base (40) ;
- un capot (15) recouvrant au moins partiellement un ou plusieurs des éléments de châssis (10a-c, 20a-c) et configuré pour assurer une isolation thermique passive afin de réduire un échange thermique entre les un ou plusieurs éléments de châssis recouverts (10a-c, 20a-c) et un environnement (2) de la machine (1) ; et
- un système de contrôle de température (5) configuré pour contrôler une température d'une pluralité d'éléments de châssis de la structure et comprenant une unité de contrôle (50), un ou plusieurs capteurs de température (51) et un ou plusieurs éléments chauffants (52),
dans laquelle
- les capteurs de température (51) sont configurés pour générer des valeurs de température et pour transmettre les valeurs de température à l'unité de contrôle (50) ; et
- l'unité de contrôle (50) est configurée pour recevoir les valeurs de température et pour contrôler les éléments chauffants (52) sur la base des valeurs de température reçues,
**caractérisée en ce que**
- au moins un élément chauffant (52) est au moins partiellement disposé à l'intérieur du capot (15) ;
- le système de contrôle de température (5) comprend un tunnel de guidage d'air (17) recouvert par le capot (15) et un ou plusieurs ventilateurs (18a, b) configurés pour guider l'air chauffé provenant de l'au moins un élément chauffant (52) à travers le tunnel (17) ; et
- l'unité de contrôle (50) est configurée pour contrôler les ventilateurs (18a, b) sur la base des valeurs de température reçues.

2. Machine de mesure par coordonnées (1) selon la revendication 1, dans laquelle l'unité de contrôler (50) est configurée pour contrôler les éléments chauffants (52) de telle sorte que la température d'un premier élément de châssis reste constante, en particulier au moins pendant une période de temps qui dure au moins aussi longtemps qu'une seule mesure d'un point de mesure par la machine (1).

3. Machine de mesure par coordonnées (1) selon la revendication 1 ou la revendication 2, dans laquelle l'unité de contrôle (50) est configurée pour contrôler les éléments chauffants (52) de telle sorte que la température d'un premier élément de châssis dépasse une température ambiante d'un environnement (2) de la machine (1), en particulier dans laquelle
- l'unité de contrôle (50) est configurée pour contrôler les éléments chauffants (52) de telle sorte que la température du premier élément de châssis atteigne une température prédéfinie qui dépasse la température ambiante ; et/ou
- au moins un capteur de température (51) est configuré pour mesurer la température ambiante.

4. Machine de mesure par coordonnées (1) selon l'une quelconque des revendications précédentes, dans laquelle la structure comprend une pluralité de bielles (10a-c) et une pluralité d'articulations (20a-c) en tant qu'éléments de châssis, dans laquelle au moins l'une des articulations (20a-c) relie de manière mobile deux des bielles (10a-c), en particulier dans laquelle
- au moins l'une des articulations (20a-c) relie de manière mobile l'une des bielles (10a-c) à la base (40) ;
- au moins l'une des articulations (20a-c) relie de manière mobile l'une des bielles (10a-c) à la tête de palpage (30) ; et/ou
- au moins un élément chauffant (52) est prévu au niveau de chacune des articulations (20a-c).

5. Machine de mesure par coordonnées (1) selon l'une quelconque des revendications précédentes, dans laquelle le tunnel de guidage d'air (17) est agencé autour d'au moins l'un des éléments de châssis (10a-c, 20a-c).

6. Machine de mesure par coordonnées (1) selon la revendication 5, dans laquelle l'élément de châssis est une bielle (10a-c) recouverte par le capot (15), et le tunnel de guidage d'air (17) est agencé en spirale autour de la bielle.

7. Machine de mesure par coordonnées (1) selon l'une quelconque des revendications précédentes, dans laquelle chaque articulation (20a-c) comprend
- une unité d'entraînement (21) comprenant un moteur pour actionner les deux bielles (10a-c) reliées par l'articulation l'une par rapport à l'autre, et
- une unité de mesure (22) comprenant un ou plusieurs capteurs angulaires pour déterminer au moins un angle entre les deux bielles (10a-c) reliées par l'articulation,
dans laquelle l'unité de mesure (21) et l'unité d'entraînement (22) sont découplées thermiquement l'une de l'autre et/ou sont prévues dans des boîtiers séparés.

8. Machine de mesure par coordonnées (1) selon l'une quelconque des revendications précédentes, dans laquelle le système de contrôle de température (5) est configuré pour contrôler une température d'un sous-ensemble des éléments de châssis (10a-c, 20a-c) de la structure, le sous-ensemble comprenant au moins deux éléments de châssis (10a-c, 20a-c), dans laquelle au moins un élément chauffant (52) est prévu au niveau de chaque élément de châssis (10a-c, 20a-c) du sous-ensemble.

9. Machine de mesure par coordonnées (1) selon l'une quelconque des revendications 1 à 7, dans laquelle le système de contrôle de température (5) est configuré pour contrôler la température de chaque élément de châssis (10a-c, 20a-c) de la structure, dans laquelle au moins un élément chauffant (52) est prévu au niveau de chaque élément de châssis (10a-c, 20a-c) de la structure.

10. Machine de mesure par coordonnées (1) selon l'une quelconque des revendications précédentes, comprenant un ou plusieurs moteurs pour entraîner la tête de palpage (30) par rapport à la base (40) afin de s'approcher du point de mesure, dans laquelle au moins un sous-ensemble des éléments chauffants (52) est constitué d'un ou plusieurs des moteurs, en particulier dans laquelle les un ou plusieurs moteurs sont des moteurs sans balais.

11. Machine de mesure par coordonnées (1) selon la revendication 10, dans laquelle le système de contrôle de température (5) comprend un ou plusieurs éléments de refroidissement et l'unité de contrôle (50) est configurée pour contrôler les éléments de refroidissement sur la base des valeurs de température reçues.

12. Machine de mesure par coordonnées (1) selon la revendication 10 ou la revendication 11, dans laquelle les un ou plusieurs capteurs de température (51) incluent au moins l'un parmi des capteurs de surveillance et des capteurs d'état thermique, dans laquelle
- les capteurs de surveillance sont configurés pour surveiller une température d'au moins un moteur de la machine (1), en particulier dans laquelle chaque capteur de surveillance est relié à l'unité de contrôle par un ensemble individuel de fils électriques ; et
- les capteurs d'état thermique sont configurés pour générer des données sur un état thermique de la machine (1) qui peuvent être utilisées pour une compensation, basée sur un modèle, d'effets thermiques, en particulier dans laquelle tous les capteurs d'état thermique sont reliés à l'unité de contrôle par le même ensemble commun de fils électriques.

13. Procédé mis en œuvre par ordinateur (100) pour mesurer des coordonnées à l'aide d'une machine de mesure par coordonnées (1) selon l'une quelconque des revendications précédentes, le procédé (100) comprenant
- l'approche successive d'une pluralité de points de mesure sur un objet (3) à l'aide d'une tête de palpage (30) de la machine de mesure par coordonnées (1) en déplaçant un ou plusieurs éléments de châssis (10a-c, 20a-c) d'une structure du dispositif de mesure par coordonnées (1) ; et
- la détermination (180) de coordonnées des points de mesure,
**caractérisé par**
- la mesure (110), à l'aide d'un ou plusieurs capteurs de température (51), de températures au niveau des un ou plusieurs éléments de châssis (10a-c, 20a-c) ;
- la génération de données de température sur la base des températures mesurées et la fourniture des données de température à une unité de contrôle (50) ; et
- le contrôle (130), par l'unité de contrôle (50) et sur la base des données de température, d'une pluralité d'éléments chauffants (52) au niveau des un ou plusieurs éléments de châssis (10a-c, 20a-c),
dans lequel les éléments chauffants (52) sont contrôlés (130) de telle sorte que la température des un ou plusieurs éléments de châssis (10a-c, 20a-c) reste constante au moins pendant que la tête de palpage (30) s'approche de la pluralité de points de mesure.

14. Procédé (100) selon la revendication 13, comprenant la détermination (120), par l'unité de contrôle (50) et sur la base des données de température, d'une demande de chauffage des un ou plusieurs éléments de châssis (10a-c, 20a-c), dans lequel le contrôle (130) des éléments chauffants (52) est basé sur la demande déterminée, en particulier dans lequel
- une ou plusieurs températures ambiantes d'un environnement (2) de la machine de mesure par coordonnées (1) sont déterminées, et la demande est déterminée (120) également sur la base des une ou plusieurs températures ambiantes, en particulier dans lequel la détermination des une ou plusieurs températures ambiantes comprend un ou plusieurs capteurs de température mesurant au moins une température ambiante ; et
- les éléments chauffants (52) sont contrôlés (130) de telle sorte qu'une température des un ou plusieurs éléments de châssis (10a-c, 20a-c) dépasse chacune des une ou plusieurs températures ambiantes.

15. Produit-programme d'ordinateur comprenant un code de programme, qui est stocké sur un support lisible par machine, ou qui est incarné par une onde électromagnétique comprenant un segment de code de programme, et comportant des instructions exécutables par ordinateur pour réaliser le procédé (100) selon la revendication 13 ou la revendication 14, lorsqu'il est exécuté sur l'unité de contrôle de la machine de mesure par coordonnées selon l'une quelconque des revendications 1 à 12.
